# EUROPÄISCHE PATENTANMELDUNG

(11) **EP 1 674 782 A1**
(43) Veröffentlichungstag der Anmeldung: **28.06.2006**
(21) Anmeldenummer: 05112484.0
(22) Anmeldetag: 20.12.2005
(51) Int. Cl.: F16L 57/06, B65G 53/52, F16L 58/08

(54) **Beschichtung für Förderorgane, Förderorgan mit derartiger Beschichtung sowie Verfahren und Vorrichtung zur Beschichtung von Förderorganen**

(30) Priorität: 21.12.2004 DE 102004062714; 05.07.2005 DE 102005032206
(71) Anmelder: Keese, Gerd, 27721 Ritterhude (DE); Häsemeyer, Hans-Dieter, 27721 Ritterhude (DE)
(72) Erfinder: Keese, Gerd, 27721 Ritterhude (DE); Häsemeyer, Hans-Dieter, 27721 Ritterhude (DE)
(74) Vertreter: Wasiljeff, Johannes M.B.

(57) **Zusammenfassung**

Die Erfindung betrifft eine Beschichtung (22-25) zum Verschleiß-Schutz für Förderorgane (21) für zu fördernde Medien, insbesondere Schüttgüter, Flüssigkeiten oder Gase, welche das Förderorgan an seiner dem Medium ausgesetzten Seite bekleidet, wobei die Beschichtung (22-25) eine Oberfläche mit Auswölbungen (25) und/oder Einwölbungen (26) aufweist. Die Erfindung betrifft ferner ein Förderorgan (21) mit einer derartigen Beschichtung (22-25) sowie ein Verfahren und eine Vorrichtung zur Beschichtung von Förderorganen.

## Beschreibung

Die Erfindung betrifft eine Beschichtung für Förderorgane für zu fördernde Medien, insbesondere Schüttgüter, Flüssigkeiten oder Gase, welche das Förderorgan an seiner dem Medium ausgesetzten Seite bekleidet. Ferner betrifft die Erfindung ein Förderorgan mit einer derartigen Beschichtung.

Des weiteren betrifft die Erfindung ein Verfahren sowie eine Vorrichtung zur Innenbeschichtung von Förderorganen, insbesondere Rohren, mit vermindertem Innenwiderstand für zu fördernde Medien, wie Schüttgüter, Flüssigkeiten oder Gase, an einer dem Medium ausgesetzten Seite des Förderorgans.

Bei dem Transport von Schüttgütern - unter welchen neben bspw. Pellets oder Granulaten auch jedwede anderen Feststoffe im vorliegenden Zusammenhang verstanden werden - kommt es häufig zu einem Verschleiß der entsprechenden Förderrohre aufgrund einer permanenten Beanspruchung der Rohrinnenseite durch immer wieder auf der Rohrinnenwandung aufprallende Körper. Jeder einzelne Aufschlag eines Teilchens bewirkt zwar an sich keinen nennenswerten Schaden. Jedoch führt die Summe der Vielzahl von Aufschlägen mit der Zeit zwangsläufig zu einem Verschleiß des entsprechenden Förderorgans, insbesondere an solchen Stellen, an denen der Förderweg nicht geradlinig verläuft.

Besonders auffällig ist der Verschleiß naturgemäß bei Festkörpern bzw. Schüttgütern. Ein Verschleiß tritt aber auch - wenn auch in geringerem Maße - bei anderen Medien auf, wie bspw. Flüssigkeiten oder Gasen.

Im Stand der Technik ist daher eine Beschichtung von Rohren vorgesehen, die der Reduzierung dieses Verschleißes dient.

Im Stand der Technik wird neben der Beschichtung aber auch ein Plattieren sowie Laserauftragschweißen bei Rohren angewendet. Gleichwohl ist all diesen Verfahren gemein, dass die Rohrinnenseite durch die stochastischen Impulse des Schüttgutes bzw. des zu fördernden Mediums mehr oder weniger stark beschädigt wird.

Der Erfindung liegt daher das Problem zugrunde, Förderorgane zu verbessern, insbesondere den Verschleiß von Förderorganen durch die fördernden Medien zu reduzieren.

Die Erfindung löst dieses Problem durch eine Beschichtung mit einer Masse, welche netzförmig angeordnete Hartkomponenten trägt und eine Oberfläche mit Auswölbungen und/oder Einwölbungen aufweist. Die Erfindung löst dieses Problem ferner durch ein Förderorgan mit einer derartigen Beschichtung.

Des weiteren löst die Erfindung dieses Problem durch ein Verfahren zur Innenbeschichtung von Förderorganen der eingangs genannten Art, bei dem eine selbstfahrende Beschichtungsapparatur verschiedene Schichten auf der Innenseite des Förderorgans, insbesondere im Innenrohr, aufbringt, wobei das Förderorgan mit einer Einbettmasse beschichtet wird, auf der Hartkomponenten netzförmig angeordnet werden und die einzelnen Lagen akustische Transportprobleme sowie den abrassiven Verschleiß des Förderorgans, insbesondere des Rohres, reduzieren.

Schließlich löst die Erfindung dieses Problem durch eine Vorrichtung zur Innenbeschichtung von Förderorganen der eingangs genannten Art mit einem Antrieb zum Antreiben der Vorrichtung längs des Förderorgans, einen Tank zur Aufnahme eines Auftragsmediums, eine Auftragseinrichtung mit einem Abscheider zum Auftragen einer Schicht des Auftragsmediums an einer Innenwandung des Förderorgans, eine Gewebeauftragseinrichtung zum Aufbringen eines Gewebes auf die aufgetragene Schicht des Auftragsmediums und eine Einrichtung zum Aufbringen einer Beschichtung mit einer Masse, die netzförmig angeordnete Hartkomponenten trägt und eine Oberfläche mit insbesondere kugelförmigen bzw. kugelkalottenförmige, teilellipsoidförmigen, schneckenförmigen, treppenförmigen und/oder wellenförmigen Auswölbungen und/oder Einwölbungen ausbildet.

Unter Auswölbungen bzw. Einwölbungen sind Vertiefungen bzw. Erhöhungen in der Oberfläche der Beschichtung zu verstehen, die auf jedwede Weise geformt sind. Diese Vertiefungen bzw. Erhöhungen sind vorzugsweise in ihren Abmessungen an die Abmessungen des zu fördernden Mediums angepasst. Bspw. weist diese Oberfläche Erhöhungen bzw. Vertiefungen mit jeweils einer Ausdehnung auf, die im wesentlichen in der Größenordnung der Abmessungen der einzelner Schüttgutteilchen liegen.

Die auf diese Weise dreidimensional strukturierte Oberfläche der Beschichtung mit vorzugsweise konvexen Auswölbungen hat den Vorteil, dass beim Aufprall eines Teilchens auf eine Auswölbung nur eine geringe Kontaktfläche zwischen dem zu fördernden Medium und der Oberfläche vorliegt, so dass nur eine sehr geringe Reibung zwischen der Oberfläche des Förderorgans und dem zu fördernden Medium entsteht. Durch geringe Reibung wird auch der Energieeintrag des zu fördernden Mediums auf die Oberfläche reduziert. Dies bewirkt zum einen einen geringeren Verschleiß der Oberfläche und zum anderen aber auch einen geringeren Widerstand des Förderorgans im Hinblick auf die beabsichtigte Förderung des Mediums. Darüber hinaus führt aber auch ein geringer Energieeintrag zu einer geringeren Geräuschbelastung der Umgebung. Insgesamt kann das zu fördernde Medium somit effizienter entlang des Förderweges transportiert werden.

Ein weiterer Vorteil besteht darin, dass durch eine Reduzierung des Innenwiderstandes des Förderorgans der Förderdruck bzw. Fördersog geringer bemessen werden kann. Hierdurch erreicht man zusätzliche Energieeinsparungen im Bereich der Förderdrücke.

Bei einer alternativen Ausgestaltung weist die dreidimensional strukturierte Beschichtungsoberfläche vorzugsweise konkave Einwölbungen auf, so wie sie bspw. bei Golfbällen eingeprägt sind. Diese Einwölbungen sorgen dafür, dass das Trägermedium für das zu fördernde Medium definierte Verwirbelungen erzeugt, welche eine Art Polster entlang des Rohres erzeugen und somit die Aufprall- und Abriebvorgänge reduzieren.

Vorzugsweise sind die Auswölbungen bzw. Einwölbungen kugelförmig bzw. kugelkalottenförmig ausgebildet. Kugelförmige bzw. kugelkalottenförmige Auswölbungen haben den Vorteil, dass beim Aufprall eines Teilchens auf eine derart geformte Auswölbung die geringstmögliche Kontaktfläche zwischen dem zu fördernden Medium und der Oberfläche des Förderorgans vorliegt, so dass eine minimale Reibung zwischen der Oberfläche des Förderorgans und dem zu fördernden Medium entsteht. Diese Formgebung von Auswölbungen als Kugeln bzw. Teilkugeln hat sich in Versuchen besonders gewährt. Kugelförmige bzw. kugelkalottenförmige Einwölbungen haben günstige Verwirbelungseigenschaften der auf diese Weise strukturierten Oberfläche gezeigt.

Die Größe bzw. die durchschnittliche Ausdehnung, insbesondere der Durchmesser der Aus- bzw. Einwölbungen ist vorzugsweise in Abhängigkeit der Größe bzw. durchschnittlichen Ausdehnung und/oder des Gewichts und/oder der Struktur des zu fördernden Stoffes, insbesondere Schüttgutes bzw. eines Schüttgutteilchens vorbestimmt bzw. definiert und liegt im Bereich von 10 % bis 50 %, insbesondere von 20 % bis 40% der Größe bzw. durchschnittlichen Ausdehnung des zu fördernden Stoffes, bspw. Schüttgutteilchens.

Bei alternativen Ausführungsformen sind die Auswölbungen bzw. Einwölbungen anders als kugelförmig bzw. kugelkalottenförmig geformt. Insbesondere sind teilellipsoidförmige, schneckenförmige, treppenförmige und/oder wellenförmige Auswölbungen und/oder Einwölbungen vorgesehen. Ferner sind bei besonderen Ausführungsformen Kombinationen verschiedener Auswölbungen und/oder Einwölbungen bei Beschichtungsoberflächen vorgesehen.

Allen konkaven Ausführungen der Einwölbungen ist gemeinsam, dass sie Wirbel erzeugen, die sich gegen die anfliegenden Schüttgutteilchen bzw. das zu fördernde Medium richten, um die Aufprallenergie auf der Oberfläche des Förderorgans zu vermindern. Dabei sind die Einwölbungen nur bei einer besonderen Ausführungsform kreisrund bzw. teilkugelförmig, während sie je nach gewünschtem Wirkungsgrad auch bestimmte Strömungslinien aufweisen und Gegenströme verursachen können, wie bspw. bei ellipsenförmigen, schneckenförmigen, treppenförmigen, wellenförmigen, etc. Einwölbungen.

In entsprechender Weise sind die konvexen Auswölbungen zwar bei einer besonderen Ausführungsform kugelförmig bzw. teilkugelförmig ausgebildet. Jedoch sind auch diesbezüglich andere konvexe Ausbildungen möglich, die in Abhängigkeit des zu fördernden Gutes, insbesondere Schüttgutes vorteilhafte Eigenschaften aufweisen.

Bevorzugterweise sind auf der Innenseite eines Förderorgans, welche dem zu fördernden Medium ausgesetzt ist, wenigstens zwei Schichten aufgebracht, nämlich eine untere Schicht, welche als Dämmschicht mehrere Funktionen übernehmen kann, und die über diese Dämmschicht liegende Schicht mit kugelförmigen bzw. kugelkalottenförmigen Auswölbungen und/oder Einwölbungen, welche den Verschleiß auf der Innenseite des Förderorgans wesentlich vermindert.

Eine erste Funktion der Dämmschicht ist die Absorption kinetischer Energie, die beim Aufprall des zu fördernden Mediums auf das Förderorgan einwirkt. Ferner dient diese untere Dämmschicht einer akustischen Dämmung bzw. Dämpfung entlang des Förderweges. Die Dämmschicht absorbiert nämlich auch einen Teil der bei der Förderung, insbesondere durch den Aufprall des zu fördernden Mediums auf das Förderorgan entstehenden Geräusche. Somit vermindert die Erfindung die akustische Beeinträchtigung beim Transport des Fördergutes entlang des Förderweges. Schließlich dient diese untere Dämmschicht auch als Bindungsmedium zwischen dem Förderorgan und der die untere Dämmschicht überdeckende dreidimensional strukturierte Oberfläche.

Die vorgenannten Auswölbungen oder Einwölbungen sind entweder unmittelbar aneinander angrenzend oder beanstandet voneinander angeordnet. Vorteilhafterweise erfolgt die Anordnung dieser Auswölbungen oder Einwölbungen netzartig, wobei vorteilhafterweise eine gleichmäßige Struktur gewählt wird. Die Auswölbungen bzw. Einwölbungen können darüber hinaus aber auch unterschiedliche Größen aufweisen, so dass bspw. etwaige Resonanzerscheinungen verhindert bzw. vermindert werden.

In einer weiteren Ausführungsform ist vorgesehen, dass die Oberflächenschicht mit Auswölbungen und/oder Einwölbungen aus vorbearbeiteter, insbesondere granulierter bzw. pulverisierter Hochofen-Schlacke gebildet wird. Dieses Material ist besonders kostengünstig und darüber hinaus von besonderer Härte und daher in besonders günstiger Weise für die Oberflächenverkleidung des Förderorgans geeignet. Es kann zu kugelförmigen bzw. kugelkalottenförmigen Einheiten verarbeitet werden, die in die Beschichtung eingearbeitet werden, so dass Auswölbungen bzw. Einwölbungen auf der Oberfläche entstehen und die vorgenannten Effekte auch mit dieser Hochofen-Schlacke erreicht werden können.

Vorteilhafterweise wird die dreidimensional strukturierte Oberfläche durch in eine Einbettmasse, z.B. Harzschicht, eingebettete Hartkomponenten, wie Kugeln bzw. Kugelkalotten gebildet. Diese Kugeln bzw. Kugelkalotten haben eine im Wesentlichen optimale Oberflächenstruktur, um die vorgenannten Effekte zu erzeugen.

Durch die Verwendung einer derartigen Einbettmasse für die Hartkomponenten, insbesondere Kugeln bzw. Kugelkalotten, kann der Aufprall des zu fördernden Mediums (z.B. Schüttgut) mechanisch und akustisch besonders wirksam absorbiert werden. Infolge einer harten Oberschicht und im Verhältnis zur Oberschicht weicherer Unterschichten erhält man vorteilhafte Dämpfungseigenschaften der erfindungsgemäßen Beschichtung.

Ferner sorgt die Einbettmasse für einen dauerhaften Halt der Kugeln bzw. Kugelkalotten am Förderorgan.

Die Unterschicht weist vorzugsweise ferner eine auf das Förderorgan aufgebrachte Klebeschicht oder Harzschicht und eine darauf aufgebrachte Gewebeschicht auf, auf welche ggf. unter Zwischenschaltung einer weiteren Klebeschicht oder Harzschicht, eine die dreidimensional strukturierte Oberfläche aufweisende Schicht aufgebracht ist. Diese Gewebeschicht dient insbesondere der Dämpfung und flexiblen Verbindung. Die Klebe- bzw. Harzschicht dient demgegenüber insbesondere der dauerhaften Fixierung der einzelnen Schichten aneinander und damit auch am Förderorgan.

Entsprechend wird bei einer besonderen Ausgestaltung des erfindungsgemäßen Verfahrens zur Innenbeschichtung folgender Schichtaufbau vom äußeren Bereich des Rohres zum inneren Bereich gewählt: Zunächst wird auf die Rohrinnenwandung eine Schicht aus Kleber oder Harz aufgebracht, dann wird auf die Klebe- bzw. Harzschicht ein Gewebe und schließlich auf das Gewebe ein Netz mit Auswölbungen und/oder Einwölbungen, insbesondere ein Kugelnetz bzw. Kugelkalottennetz bzw. ein Netz mit teilellipsoidförmigen, schneckenförmigen, treppenförmigen und/oder wellenförmigen Auswölbungen und/oder Einwölbungen, aufgebracht. Bei einer weiteren besonderen Ausführungsform dieses Verfahrens wird jedoch vor dem Aufbringen des Netzes mit Auswölbungen und/oder Einwölbungen, insbesondere Kugelnetzes bzw. Kugelkalottennetzes, eine weitere Klebe- oder Harzschicht auf das Gewebe aufgebracht, um eine noch bessere Verbindung des Kugelnetzes bzw. Kugelkalottennetzes mit dem Gewebe zu erreichen.

Bei einer weiteren besonderen Ausführungsform ist in die Beschichtung wenigstens eine Messsonde integriert, welche einen etwaigen Verschleiß der Beschichtung detektiert bzw. anzeigt. Auf diese Weise können notwendige Wartungsarbeiten, die dank der Erfindung ohnehin nur noch selten notwendig sind, rechtzeitig erkannt werden. Dies ist vorteilhaft im Hinblick darauf, dass derartige Wartungsarbeiten immer zu einem Abschalten der Anlage führen und damit zu hohen Produktionsausfallkosten. Eine frühzeitige Planbarkeit dieser Wartungsarbeiten ist daher unter Kostengesichtspunkten wichtig. Deshalb sind derartige integrierte Messsonden besonders vorteilhaft.

Ferner können in die Beschichtung Messsonden bzw. Sensoren integriert werden, welche Daten über die Zustände der sich im Förderorgan befindenden Medien, insbesondere des zu fördernden Mediums (bspw. eines Schüttguts) und des Fördermediums (bspw. Luft oder ein Gas), liefern, wie z.B. der Temperatur, der Feuchtigkeit oder anderer chemischer und physikalischer Zustände und Eigenschaften. Ferner dienen diese Sonden bzw. Sensoren vorzugsweise auch der Prüfung der Dichtigkeit von Rohren.

Vorteilhafterweise werden als Förderorgane Rohre, Rinnen, Trichter oder auch andere Bearbeitungsorgane, wie z.B. Sichter, an denen das bzw. die zu fördernden Medien entlang gefördert werden, eingesetzt. Vorzugsweise werden derartige Förderorgane nur an Prallflächen, auf welche das zu fördernde Medium in substantieller Weise aufprallt, mit einer erfindungsgemäßen Beschichtung versehen.

Bei einer vorteilhaften Ausführungsform des Verfahrens bringt die Beschichtungsapparatur die Schichten einzeln oder mehrlagig auf und zwar selbstfahrend, wobei die Schichten spritzend, pressend oder reibauftragschweißend für metallische Komponenten der Hartschicht aufgebracht werden. Auf diese Weise wird eine hoch automatisierte und damit effiziente Beschichtung erreicht.

Vorteilhafterweise wird eine Basisgrundschicht als Fundament reibauftraggeschweißt, auf welche ein Netz aufgebracht und in den Netzmaschen ein Kleber für die Gewebekomponenten eingebracht wird.

Bei einer weiteren besonderen Ausführungsform pressen spezielle Lamellen an der Auftragsapparatur die neuen Schichten an die Innenwandung des Rohres zu einem Verbund. Hierdurch wird eine besondere Festigkeit der gebildeten Beschichtung erreicht.

Bei einer weiteren besonderen Ausführungsform werden in die einzelnen Schichten Elemente zur Korrosionsdämpfung mit eingearbeitet, um die Rostbildung innerhalb des Förderorgans zu vermindern bzw. zu unterbinden. Hierdurch kann die Lebensdauer des Förderorgans weiter erhöht werden.

Vorteilhafterweise werden in der dreidimensional strukturierten Oberfläche metallische Komponenten aus hoch legierten Stählen verwendet. Auch durch diese Maßnahme kann die Lebensdauer der Beschichtung weiter erhöht werden.

Vorteilhafterweise werden als Gewebe organische oder anorganische Werkstoffe oder Naturstoffe benutzt. Diese Stoffe eignen sich besonders zur vorgenannten Dämmung.

Bei einer weiteren besonderen Ausführungsform wird im Gießverfahren bzw. Negativ-Formenbau flüssiges Beschichtungsmaterial eingebracht und anschließend gehärtet, um die gewünschte Beschichtung zu erreichen.

Bei einer weiteren besonderen Ausführungsform werden eine, mehrere oder alle Schichten über vorgefertigte, flexible Folien bzw. Matten in das Förderorgan eingebracht und thermisch, chemisch und/oder mechanisch miteinander und mit dem Förderorgan verbunden. Durch diese externe Fertigung der Beschichtung können produktionstechnische Vorteile und eine höhere Verschleißresistenz erreicht werden.

Weiter bevorzugt werden Förderorgane, bspw. innen zu beschichtende Behältnisse oder Röhren bzw. Rohrbögen als Halbschalen gefertigt, auf welche die Beschichtung aufgebracht wird und anschließend die Halbschalen dauerhaft miteinander verbunden werden.

Weitere vorteilhafte Ausführungsformen ergeben sich aus den Unteransprüchen sowie aus den anhand der beigefügten Zeichnungen näher erläuterten Ausführungsbeispielen. Es zeigt:
- Fig. 1A: einen schematischen Längsschnitt eines Rohres mit einer Beschichtung gemäß einem Ausführungsbeispiel der Erfindung;
- Fig. 1B: einen schematischen Querschnitt eines Rohres gemäß einem zweiten Ausführungsbeispiel der Erfindung;
- Fig. 2: eine Vorrichtung zur Innenbeschichtung von Förderorganen gemäß einem Ausführungsbeispiel der Erfindung und
- Fig. 3: einen schematischen Längsschnitt eines Rohrbogens zur Veranschaulichung eines Verfahrens zur Innenbeschichtung von Förderorganen gemäß einem Ausführungsbeispiel der Erfindung.

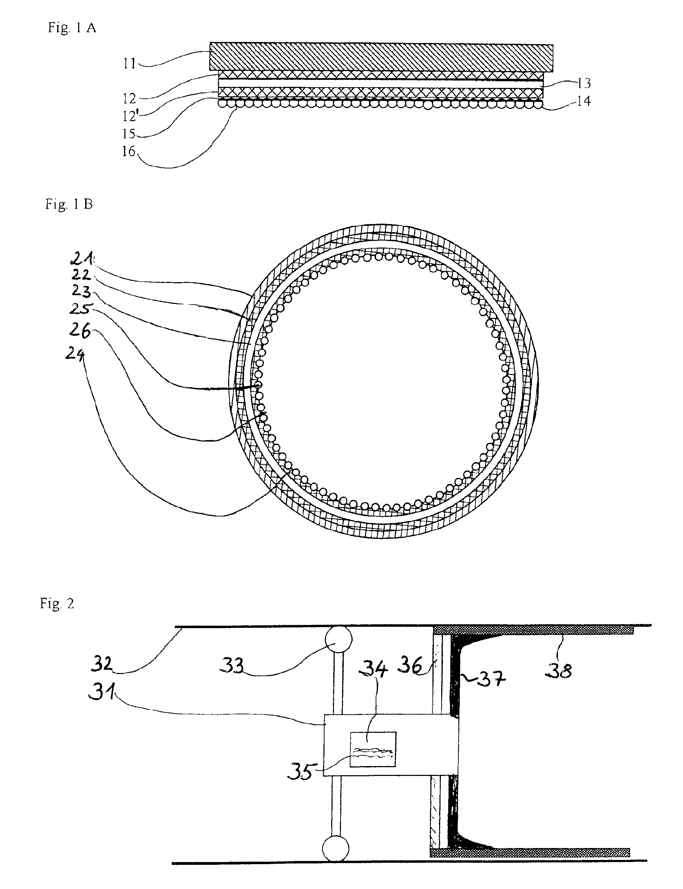

Fig. 1 zeigt ein Förderorgan 11 in Form eines Rohres in einem Längsschnitt, wobei jedoch nur ein oberer Teil dieses Längsschnitts dargestellt ist. D.h. im unteren Teil der Fig. 1A befindet sich die Innenseite des Rohres, während sich oberhalb des in Fig. 1A dargestellten Rohres die Außenseite befindet.

Auf dem eigentlichen Rohr 11 ist zunächst eine Harzschicht 12 aufgetragen, auf der wiederum eine Gewebeschicht 13 als Dämmschicht, insbesondere als akustische Dämpfungsschicht aufgebracht ist. Auf dieser Gewebeschicht 13 ist eine weitere Harzschicht 12' aufgetragen, die eine Schicht aus hartem Material, eine sog. Hartschicht 14 trägt.

Die Harzschichten 12 und 12' dienen dem Verkleben der jeweils benachbarten Schichten und können daher auch aus jedwedem anderen klebenden Material gebildet sein und bilden somit allgemein eine Klebeschicht.

Die Hartschicht 14 dient als Verschleißreduzierer und ist in Form von einem oder mehreren Kugelkalottennetzen gebildet, die mit einem Verbindungsteil 15 auf die Harzschicht 12' aufgebracht und mit dieser verbunden sind. In dem in Fig. 1A dargestellten Ausführungsbeispiel sind die Kugeln bzw. Kugelkalotten aneinandergrenzend angeordnet, wobei sich gleichwohl Zwischenräume 16 zwischen den einzelnen Kugeln bzw. Kugelkalotten bilden.

In diesen Zwischenräumen 16 können sich im Laufe der Benutzung des Förderorgans 11 Staub oder Flüssigkeiten sammeln. Die Staubpartikel bzw. Flüssigkeitsansammlungen reduzieren den Transportwiderstand bzw. Innenwidersand des Förderorgans gleicher oder ähnlicher Stoffe, ähnlich wie dies beim Effekt des "Aquaplaning" auftritt.

Die Kugeln bzw. Kugelkalotten der Hartschicht 14 sind aus einem harten Werkstoff gebildet, so dass aufprallende Teilchen des zu fördernden Mediums von diesen Kugeln abprallen, so dass der Verschleiß der Innenbeschichtung des Förderorgans 11 signifikant reduziert ist.

Die Harzschicht 12 wird in das Förderorgan 11 hineingespritzt. Die Gewebeschicht 13 wird demgegenüber schlauchähnlich hineingezogen und anschließend wird, ggf. nach Aufbringung einer weiteren Harzschicht 12' die Hartschicht 14 in Form eine Kugelnetzes bzw. Kugelkalottennetzes angepresst.

Neben der durch die Hartschicht 14 erreichten Verschleißminderung erreicht dieser Schichtaufbau eine akustische Dämpfung, insbesondere aufgrund der Gewebeschicht 13 sowie der Harzschichten 12, 12'.

Fig. 1 B zeigt ein weiteres Ausführungsbeispiel eines Rohres 21 im Querschnitt. Auf diesem Rohr 21 ist wiederum eine Klebeschicht bzw. Harzschicht 22 aufgetragen, welche mit einer Gewebeschicht 23 überzogen ist. Auf diese Gewebeschicht 23 ist eine Klebeschicht bzw. Harzschicht 24 aufgetragen, welche die Hartschicht 25 in Form eines Kugelnetzes bzw. Kugelkalottennetzes trägt. Zwischen den Kugeln bzw.

Kugelkalotten befinden sich im Vergleich zu dem in Fig. 1A dargestellten Ausführungsbeispiel größere Abstände 26, d.h. die Kugeln bzw. Kugelkalotten sind in dem Ausführungsbeispiel gemäß Fig. 1 B beabstandet voneinander angeordnet, während sie in dem Ausführungsbeispiel gemäß Fig. 1A aneinander angrenzend angeordnet sind.

Ferner unterscheidet sich das Ausführungsbeispiel gemäß Fig. 1 B von dem Ausführungsbeispiel gemäß Fig. 1A dadurch, dass kein Verbindungsteil 15 zwischen dem Kugelnetz bzw. Kugelkalottennetz und der entsprechenden Klebe- bzw. Harzschicht 12' bzw. 24 angeordnet ist.

In den Fig. 1A und 1B ist die dreidimensional strukturierte Oberfläche in Form von positiven Auswölbungen auf der Oberfläche, nämlich in Form von kugelförmigen Körpern ausgebildet. Zwar sind die dargestellten kugelförmigen Körper von im wesentlichen gleicher Größe. Bei einem alternativen Ausführungsbeispiel können sich diese kugelförmigen Körper jedoch auch in ihrer Größe unterscheiden, d.h. mit unterschiedlichen Größen gebildet sein. Insbesondere ist die Größe dieser kugelförmigen Körper jedoch an das zu fördernde Medium angepasst. Je größer die einzelnen Teile bzw. Partikel des zu fördernden Mediums sind, desto größer sind diese Kugeln bzw. kugelförmigen Körper ausgebildet.

Die kugelförmigen Körper führen dazu, dass die auftreffenden Materialien eine möglichst geringe Berührungsfläche mit den kugelförmigen Körpern haben, wodurch der Verschleiß an der Rohrinnenbeschichtung minimiert wird.

Alternativ kann jedoch statt positiver Auswölbungen auch vorgesehen sein, dass die Oberfläche der Beschichtung kugelförmige Einwölbungen aufweist, ähnlich wie dies bei Golfbällen der Fall ist. Auch diese Einwölbungen sind wiederum an die Teilchen des zu fördernden Mediums in Bezug auf ihre Größe angepasst. Diese Einwölbungen sorgen dafür, dass das Trägermedium, bspw. eine Flüssigkeit oder ein Gas, in dem das zu fördernde Medium transportiert wird, definierte Verwirbelungen im Bereich der Beschichtung erzeugt, die eventuelle Aufprallvorgänge verhindern bzw. reduzieren.

Die innerste Schicht, nämlich die Hartschicht 14 bzw. 25 kann aus bearbeiteter, granulierter, pulverisierter Hochofen-Schlacke bestehen. Diese Schlacke ist günstig auf allen Weltmärkten zu beziehen und daher unter Kostengesichtspunkten vorteilhaft.

Im übrigen können in die Hartschicht 14, 25 kleine Stahl- oder Hartmetallkügelchen eingebettet werden. Der Durchmesser der Kugeln bzw. der kugelförmigen oder kugelkalottenförmigen Aus-/ oder Einwölbungen liegt im Bereich von 0,5-20 mm, vorzugsweise in einem Bereich von 1-5 mm.

Die dargestellte Beschichtung kann Förderorgane entweder vollständig oder auch nur teilweise auskleiden. Besonders günstig ist es, die stark beanspruchten Flächen von Förderorganen, insbesondere Prallflächen, auf denen das zu fördernde Medium aufprallt, mit einer derartigen Beschichtung zu versehen, während andere Flächen auch unbeschichtet bleiben können. Eine Beschichtung ist insbesondere im Bereich von Bögen von Förderorganen bzw. auch in Bereichen mit starker Verwirbelung vorgesehen.

Die untere Dämmschicht, bestehend aus der Klebe- bzw. Harzschicht 12, 12' bzw. 22, 24 und der Gewebeschicht 13 bzw. 23 dient insbesondere der Verringerung der Lärmbildung durch Auftreffen bzw. Aufprallen von Teilchen auf die Innenwandung des Förderorgans 11, 21 aber auch einer Temperaturdämmung entlang des Förderweges, d.h. einer thermischen Isolierung zwischen dem Inneren des Förderorgans und der Umgebung.

Die Hartschicht 14 bzw. 25 ist bei einer alternativen Ausführungsform als Matte ausgebildet, in welche die Struktur der kugelförmigen bzw. kugelkalottenförmigen Auswölbungen und/oder Einwölbungen eingeprägt ist. Das heißt es ist nicht erforderlich, dass eine Vielzahl von einzelnen Kugeln bzw. kugelähnlichen Körpern in eine Klebe- bzw. Harzschicht eingearbeitet wird. Vielmehr kann eine derartige Schicht einstückig ausgebildet sein. Dies gilt sowohl für die kugelförmigen Ausnehmungen als auch für die entsprechend umgekehrt ausgerichteten Einwölbungen.

Ferner ist bei einem weiteren Ausführungsbeispiel auch die unter der Hartschicht 14 bzw. 25 liegende Dämmschicht 12, 13 bzw. 22, 23 in eine derartige Matte integriert. Somit ist die gesamte Beschichtung des Förderorgans einstückig ausgebildet. Derartige Beschichtungen können bspw. aus Kunststoffen hergestellt werden, in welche die gewünschten kugelförmigen bzw. kugelkalottenförmigen Auswölbungen und/oder Einwölbungen eingeprägt sind.

Fig. 2 zeigt eine Vorrichtung 31, die innerhalb eines Förderorgans 32 mittels eines eigenen Antriebs 33 angetrieben wird. Die Vorrichtung 31 weist einen Tank 34 zur Aufnahme eines Auftragsmediums 35 auf, das mittels einer Auftragsvorrichtung 36 sowie Abscheidern 37 an der Innenwandung des Förderorgans 32 aufgetragen wird, wo eine Beschichtung 38, wie oben im Zusammenhang mit den Fig. 1A und 1 B beschrieben, entsteht.

Dieser Auftrag der verschiedenen Schichten kann mittels aufeinanderfolgender Auftragsvorrichtungen erfolgen, so dass der gesamte Prozess der Beschichtung des Förderorgans 32 schnell und effizient durchgeführt werden kann.

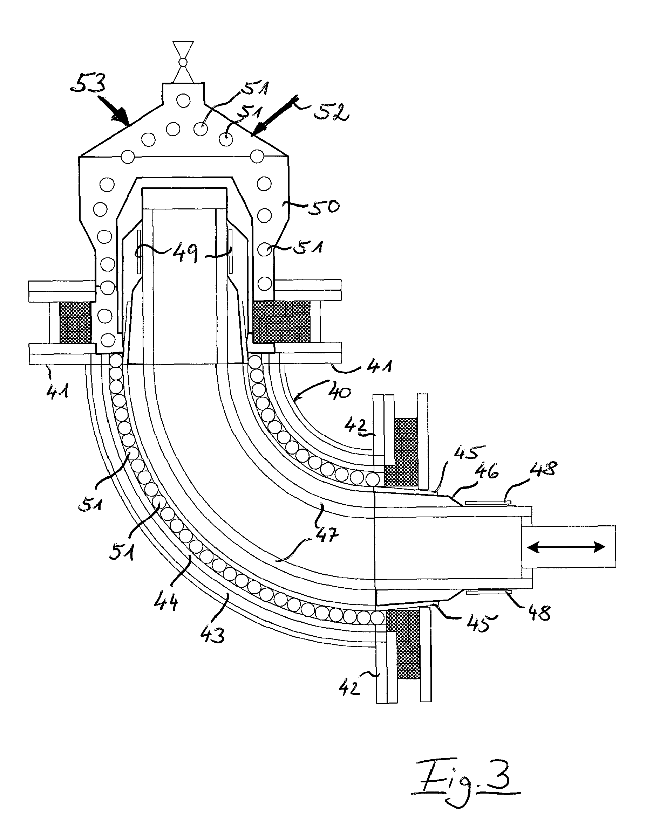

Fig. 3 veranschaulicht ein Verfahren zur Innenbeschichtung eines Rohrbogens 40 mit Flanschen 41, 42. Zur Herstellung einer Beschichtung gemäß einem Ausführungsbeispiel der Erfindung wird zunächst eine Dämmschicht 43 auf der Innenseite des Rohrbogens 40 aufgetragen, bspw. aufgespritzt. Auf diese Dämmschicht 43 wird sodann eine Haftschicht 44 aufgebracht. Dies kann wiederum durch Aufspritzen erfolgen. Anschließend wird eine mit einer Antihaftschicht 45 versehene Blähmanschette 46 in den Rohrbogen eingeführt, welche auf einem der Form des Rohrbogens 40 entsprechenden Formbogen 47 aufliegt. Dieser Formbogen 47 ist luftdurchlässig und bspw. aus einem Sintermetall ausgebildet. An seinen Endbereichen ist der Formbogen 47 mit Dichtbandagen 48, 49 versehen, welche verhindern, dass unkontrolliert Luft durch den Formbogen 47 hindurchtreten kann.

Nachdem der Formbogen 47 samt Blähmanschette 46 in den Rohrbogen 40 eingeführt worden ist, werden über eine Füllglocke 50 in den Zwischenraum zwischen der Haftschicht 44 und der Antihaftschicht 45 Kugeln 51 sowie ein Bindemittel 52 gegeben. Über die Füllglocke wird ferner Druckluft 53 zugeführt, welche die Kugeln 51 und das Bindemittel 52 in den Zwischenraum zwischen der Haftschicht 44 und der Antihaftschicht 45 hineinpressen.

In einem weiteren Schritt wird dann über eine Öffnung an einem in der Fig. 3 dargestellten unteren rechten Ende des Formbogens 47 Überdruck zugeführt, so dass Druckluft oder ein sonstiges unter Überdruck stehendes Medium durch den insofern durchlässigen Formbogen 47 hindurchtritt und die Blähmanschette 46 samt Antihaftschicht 45 aufbläht. Durch diesen Aufblähprozess werden die Kugeln 51 in die Haftschicht 44 gedrückt und zwar unter Zwischenschaltung des Bindemittels 52.

Das Bindemittel härtet nach einer vorgegebenen Zeit aus. Anschließend kann der Formbogen 47 samt Blähmanschette 46 aus dem Rohrbogen 40 entnommen werden, wobei die Antihaftschicht 45 dafür sorgt, dass die Blähmanschette 46 sich problemlos von den Kugeln 51 bzw. dem Bindemittel 52 löst.

Die dem Rohrinneren zugewandten Zwischenräume zwischen den Kugeln 51 sind zwar zunächst noch mit dem Bindemittel 52 gefüllt. Diese Zwischenräume können jedoch durch die Verwendung von Schüttgut oder einem speziellen Reinigungsgranulat, dessen Körnung an diese Zwischenräume angepasst ist, freigerieben werden, so dass nach kurzer Zeit die dem Rohrinneren zugewandten Oberflächen der Kugeln 51 wieder freigelegt sind.

Dank der Erfindung können Flüssigkeiten und Gase sowie Schüttgüter und andere zu transportierende Stoffe auf vorteilhafte Weise mit verminderter Reibung durch Förderorgane, insbesondere Rohre geleitet werden. Hierdurch kann man eine Energieeinsparung bis zu 30% für die Förderung erreichen.

Die spezielle Oberflächenbeschichtung des Förderorgans bzw. Rohres an seiner Innenwandung sorgt in vorteilhafterweise dafür, dass keine oder allenfalls eine geringe Verschmutzung der Innenwandung des Rohres stattfindet. Die besondere Oberfläche sorgt darüber hinaus auch für eine Selbstreinigung des Rohres im Betrieb, so dass derartig ausgebildete Rohre bzw. Förderorgane mit einem geringen Wartungsaufwand betrieben werden können. Die gleichwohl in den Zwischenräumen der dreidimensional strukturierten Oberfläche sich ablagernden Staubpartikel und ähnlicher Partikel sind darüber hinaus vorteilhaft, da sie den Transportwiderstand gleicher oder ähnlicher Stoffe nach dem o.g. Effekt des "Aquaplaning" vermindern.

Insgesamt stellt die Erfindung eine Innenbeschichtung für Förderorgane, insbesondere Rohre und andere Hohlkörper dar, die den Innenwiderstand des zu transportierenden Mediums vermindert und ferner akustische Transportgeräusche durch dämpfende Zwischenlagen reduziert und schließlich durch spezielle Hartschichten an der dreidimensional strukturierten Oberfläche mit entsprechenden Geometrien den abrassiven Innenverschleiß wesentlich verkleinert.

## Patentansprüche

1. Beschichtung für Förderorgane (11, 21) für zu fördernde Medien, insbesondere Schüttgüter, Flüssigkeiten oder Gase, wobei das Förderorgan (11, 21) an einer dem zu fördernden Medium ausgesetzten Seite eine Oberfläche (14; 25) mit Auswölbungen und/oder Einwölbungen aufweist,
**dadurch gekennzeichnet, dass** die Auswölbungen und/oder Einwölbungen der Oberfläche (14; 25) durch die Beschichtung des Förderorgans (11, 21) mit einer Masse (12'; 24) ausgebildet sind, welche netzförmig angeordnete Hartkomponenten trägt.

2. Beschichtung nach Anspruch 1,
**dadurch gekennzeichnet, dass** die Auswölbungen bzw. Einwölbungen kugelförmig bzw. kugelkalottenförmig, teilelipsoidförmig, schneckenförmig, treppenförmig und/oder wellenförmig ausgebildet sind und vorzugsweise die Oberfläche (14; 25) mit Auswölbungen bzw. Einwölbungen aus Hochofen-Schlacke oder Hartmetallplättchen gebildet ist, insbesondere die Oberfläche (14; 25) durch in eine Einbettmasse (12'; 24), insbesondere Harzschicht, eingebettete Kugeln bzw. Kugelkalotten, gebildet ist, wobei vorzugsweise die Kugeln bzw. Kugelkalotten aus Hochofen-Schlacke gebildet sind.

3. Beschichtung nach Anspruch 1 oder 2,
**dadurch gekennzeichnet, dass**
die Beschichtung eine untere Dämmschicht (12, 13; 22, 23) aufweist, welche zwischen der Oberfläche (14; 25) mit Auswölbungen bzw. Einwölbungen und dem Förderorgan liegt, wobei bevorzugt die Unterschicht eine auf das Förderorgan (11, 21) aufgebrachte Klebeschicht oder Harzschicht (12; 22) und eine darauf aufgebrachte Gewebeschicht (13; 23) aufweist, auf welche, ggf. unter Zwischenschaltung einer weiteren Klebeschicht oder Harzschicht (12'; 24), eine die dreidimensional strukturierte Oberfläche aufweisende Schicht (14; 25) aufgebracht ist.

4. Förderorgan mit einer Beschichtung gemäß einem der vorhergehenden Ansprüche.

5. Verfahren zur Innenbeschichtung von Förderorganen (11, 21), insbesondere Rohren,
**dadurch gekennzeichnet, dass**
eine selbstfahrende Beschichtungsapparatur (31) verschiedene Schichten auf dem Förderorgan (11, 21) aufbringt, wobei das Förderorgan (11, 21) mit einer Einbettmasse (12'; 24) beschichtet wird, auf der Hartkomponenten netzförmig angeordnet werden.

6. Verfahren nach Anspruch 5,
**dadurch gekennzeichnet, dass**
eine Hartinnenschicht (14; 25) aus Hochofenschlacke oder Hartmetallplättchen oder gehärteten Kugelkalotten oder Kugeln gebildet wird, wobei insbesondere ein Harz (12, 12'; 22, 24) als Einbettmasse für Hartkomponenten (14; 25) bzw. das Gewebe (13; 23) benutzt wird, wobei vorzugsweise folgende Schichten von außen nach innen aufgebaut werden:
a) auf die Rohrinnenwandung (11; 21) wird eine Schicht (12; 22) aus Kleber oder Harz aufgebracht;
b) auf die Klebe- bzw. Harzschicht (12; 22) wird ein Gewebe (13; 23) aufgebracht, für welches bevorzugt organische oder anorganische Werkstoffe oder Naturstoffe benutzt werden und
c1) auf das Gewebe (13; 23) wird ein Netz mit Auswölbungen und/oder Einwölbungen, insbesondere ein Kugelnetz bzw. Kugelkalottennetz (14; 25) bzw. ein Netz mit teilellipsoidförmigen, schneckenförmigen, treppenförmigen und/oder wellenförmigen Auswölbungen und/oder Einwölbungen, aufgebracht oder
c2) auf das Gewebe (13; 23) wird eine weitere Klebe- oder Harzschicht (12'; 24) aufgebracht und auf die weitere Klebe- oder Harzschicht (12'; 24) wird ein Netz mit Auswölbungen und/oder Einwölbungen, insbesondere ein Kugelnetz bzw. Kugelkalottennetz (14; 25) bzw. ein Netz mit teilellipsoidförmigen, schneckenförmigen, treppenförmigen und/oder wellenförmigen Auswölbungen und/oder Einwölbungen, aufgebracht.

7. Verfahren nach der Anspruch 5 oder 6,
**dadurch gekennzeichnet, dass**
die Beschichtungsapparatur (31) die Schichten einzeln oder mehrlagig selbstfahrend, spritzend, pressend und/oder reibauftragschweißend für metallische Komponenten der Härteschicht aufbringt, wobei vorzugsweise eine Basisgrundschicht als Fundament reibauftraggeschweißt wird, auf die ein Netz aufgebracht bzw. angepunkst wird und in den Maschen ein Kleber für die Gewebekomponenten eingebracht wird.

8. Verfahren nach einem der Ansprüche 5 bis 7,
**dadurch gekennzeichnet, dass**
eine, mehrere oder alle Schichten der Beschichtung über vorgefertigte, flexible Folien bzw. Matten in das Förderorgan eingebracht und sodann thermisch, chemisch und/oder mechanisch miteinander und mit dem Förderorgan (11, 21) verbunden werden, wobei vorzugsweise spezielle Lamellen an der Auftragsapparatur (31) die neuen Schichten an der Innenwandung des Rohres zum Verbund pressen.

9. Verfahren nach einem der Ansprüche 5 bis 8,
**dadurch gekennzeichnet, dass**
das Förderorgan (11, 21), insbesondere Innen zu beschichtende Behältnisse oder Röhren und Rohrbögen als Halbschalen gefertigt werden, sodann die Beschichtung aufgebacht und die Halbschalen anschließend dauerhaft miteinander verbunden werden.

10. Vorrichtung zur Beschichtung von Förderorganen (11, 21), insbesondere Rohren, mit einer dem zu fördernden Medium wie Schüttgüter, Flüssigkeiten oder Gase zugewandt liegenden Beschichtungsoberfläche,
**gekennzeichnet durch**
a) einen Antrieb (33) zum Antreiben der Vorrichtung längs des Förderorgans, einen Tank (34) zur Aufnahme eines Auftragsmediums (35),
b) eine Auftragseinrichtung (36) mit einem Abscheider (37) zum Auftragen einer Schicht des Auftragsmediums (35) an einer Innenwandung des Forderorgans,
c) eine Gewebeauftragseinrichtung zum Aufbringen eines Gewebes auf die aufgetragene Schicht des Auftragsmediums, und
d) eine Einrichtung zum Aufbringen einer Beschichtung mit einer Masse, die netzförmig angeordnete Hartkomponenten trägt und eine Oberfläche (14; 25) mit insbesondere kugelförmigen bzw. kugelkalottenförmige, teilellipsoidförmigen, schneckenförmigen, treppenförmigen und/oder wellenförmigen Auswölbungen und/oder Einwölbungen aufweist.

11. Vorrichtung nach Anspruch 10,
**dadurch gekennzeichnet, dass**
die Einrichtung zum Aufbringen einer dreidimensional strukturierten Schicht (14; 25) wenigstens ein Organ zum Aufbringen eines Netzes mit Auswölbungen und/oder Einwölbungen, insbesondere eines Kugelnetzes bzw. Kugelkalottennetzes bzw. eines Netzes mit teilellipsoidförmigen, schneckenförmigen, treppenförmigen und/oder wellenförmigen Auswölbungen und/oder Einwölbungen, aufweist.
